**Europäisches Patentamt**

**European Patent Office**

**Office européen des brevets**

(19)

(11) **EP 1 459 979 B1**

(12) **FASCICULE DE BREVET EUROPEEN**

(45) Date de publication et mention
de la délivrance du brevet:
**31.08.2005 Bulletin 2005/35**

(51) Int Cl.⁷: **B64D 45/04**, G01S 1/14,
G05D 1/06

(21) Numéro de dépôt: **04290502.6**

(22) Date de dépôt: **25.02.2004**

(54) **Procédé et dispositif pour déterminer au moins une information de position verticale d'un aéronef**

Verfahren und Vorrichtung zur Bestimmung von mindestens einer Angabe bezüglich der vertikalen Position eines Luftfahrzeuges

Method and device for determining at least one information regarding the vertical position of an aircraft

(84) Etats contractants désignés:
**AT BE BG CH CY CZ DE DK EE ES FI FR GB GR HU IE IT LI LU MC NL PT RO SE SI SK TR**

(30) Priorité: **19.03.2003 FR 0303335**

(43) Date de publication de la demande:
**22.09.2004 Bulletin 2004/39**

(73) Titulaire: **AIRBUS France**
**31060 Toulouse (FR)**

(72) Inventeurs:
• **Rouquette, Patrice**
**12740 La Loubiere (FR)**
• **Peyrucain, Eric**
**31180 Saint Genies Bellevue (FR)**
• **Rosay, Jacques**
**31000 Toulouse (FR)**

(74) Mandataire: **Hauer, Bernard**
**Cabinet Bonnétat**
**29, Rue de Saint-Pétersbourg**
**75008 Paris (FR)**

(56) Documents cités:
DE-A- 3 621 052   US-A- 3 697 022
US-A- 5 820 080

**Description**

La présente invention concerne un procédé et un dispositif pour déterminer au moins une information de position verticale d'un aéronef lors de son atterrissage.

On sait que de nombreux aéroports sont équipés d'un système de radionavigation au sol émettant des signaux permettant un atterrissage de précision aux instruments de type ILS ("Instrument Landing System") d'un aéronef, en particulier d'un avion de transport civil, équipé de récepteurs appropriés.

Un tel système de radionavigation comporte des stations sol qui sont situées en bordure de piste et au moins un récepteur radio spécialisé monté à bord de l'aéronef, qui fournit un guidage horizontal et vertical avant et pendant l'atterrissage en présentant au pilote la déviation latérale par rapport à un axe d'approche et la déviation verticale par rapport à un plan de descente. Ledit système de radionavigation comporte généralement, comme stations sol :

- un radioémetteur UHF directionnel, placé en aval du seuil de piste et d'un côté ou de l'autre de l'axe de la piste, et destiné à assurer le guidage vertical le long d'un axe d'approche d'après un plan idéal de descente en approche "ILS", grâce à l'émission d'un faisceau de guidage vertical (faisceau "Glide") approprié. Plus précisément, ce radioémetteur émet deux signaux à modulation différente qui sont alignés l'un au-dessus de l'autre et qui se chevauchent dans l'axe d'approche où les deux signaux sont reçus à égale intensité ; et

- un radioémetteur VHF directionnel, généralement placé sur l'axe de piste à l'extrémité opposée au seuil d'approche, et destiné à assurer le guidage en azimut le long de l'axe d'approche d'après un profil d'alignement latéral idéal en approche "ILS", grâce à l'émission d'un faisceau d'alignement latéral (faisceau "Loc") approprié. Plus précisément, ce radioémetteur émet deux signaux à modulation différente qui se chevauchent dans l'axe d'approche où les deux signaux sont reçus à égale intensité.

Un tel système de radionavigation apporte une assistance importante et efficace à l'atterrissage (par un guidage latéral et un guidage vertical), en particulier par mauvaise visibilité (brouillard, ...) ou en absence de visibilité.

Toutefois, il peut arriver qu'un tel système de radionavigation soit incomplet ou au moins partiellement en panne de sorte que le pilote n'a alors plus accès à toutes les informations permettant un atterrissage complètement assisté.

La présente invention s'applique au cas où aucun faisceau "glide" (guidage vertical) n'est disponible, seul un faisceau "loc" (guidage latéral) étant détectable à partir de l'aéronef.

Un tel cas peut se présenter notamment dans les situations suivantes :

- le système de radionavigation comporte uniquement des moyens pour émettre un faisceau "loc" ;
- les moyens dudit système de radionavigation destinés à émettre un faisceau "glide" sont en panne ;
- le système de radionavigation émet un faisceau "glide" vers l'avant de la piste et des faisceaux "loc" vers l'avant, ainsi que vers l'arrière de la piste, et l'atterrissage est réalisé par l'arrière.

Lorsqu'un tel cas se présente, le pilote doit gérer le guidage vertical sans assistance. Une telle gestion nécessite une charge de travail importante et une attention élevée de la part du pilote, ce qui peut parfois augmenter le risque d'erreurs et donc entraîner une sécurité de vol moindre que lors d'une approche de précision de type "ILS", pour laquelle, comme indiqué précédemment, le pilote bénéficie notamment d'une assistance pour le guidage vertical.

La présente invention a pour objet de remédier à ces inconvénients. Elle concerne un procédé pour déterminer au moins une information de position verticale d'un aéronef lors de son atterrissage sur une piste d'atterrissage, en présence uniquement d'un faisceau d'alignement latéral (c'est-à-dire d'un faisceau "loc") qui est émis à partir du sol et qui donne une indication sur l'alignement latéral par rapport à l'axe d'approche, et donc en l'absence d'un faisceau de guidage vertical (faisceau "glide") détectable.

A cet effet, selon l'invention, ledit procédé est remarquable en ce que :

a) on détecte ledit faisceau d'alignement latéral sur l'aéronef ;
b) à partir d'informations relatives audit faisceau d'alignement latéral ainsi détecté et d'informations prédéterminées, on détermine un axe d'approche de l'aéronef ;
c) on détermine la position effective de l'aéronef ;
d) on détermine une position de consigne de l'aéronef, qui correspond à la position qu'aurait l'aéronef s'il se trouvait sur ledit axe d'approche ; et
e) à partir de ladite position effective et de ladite position de consigne de l'aéronef, on calcule la déviation verticale de l'aéronef, qui représente ladite information de position verticale.

Ainsi, grâce à l'invention, on obtient une information de position verticale de l'aéronef, uniquement à partir d'un faisceau d'alignement latéral (faisceau "loc"), c'est-à-dire sans utiliser un faisceau de guidage vertical (faisceau "glide").

De façon avantageuse, à l'étape b), pour déterminer ledit axe d'approche :

α) on forme un ensemble de premiers axes passant tous par un même point prédéterminé situé au sol au moins à proximité de ladite piste d'atterrissage et présentant tous une même pente prédéterminée ; et

β) on choisit comme axe d'approche un premier axe dudit ensemble de premiers axes, dont la projection sur un plan horizontal est parallèle à la projection sur ce plan horizontal dudit faisceau d'alignement latéral détecté.

En outre, avantageusement, à l'étape c), on détermine la position effective de l'aéronef, à partir de valeurs de longitude, de latitude et d'altitude de l'aéronef.

Dans un mode de réalisation préféré, la valeur d'altitude de l'aéronef, que l'on utilise, est obtenue à l'aide d'au moins une mesure réalisée par au moins une sonde barométrique.

Dans ce cas, dans une première variante de réalisation, on corrige la valeur d'altitude mesurée, en fonction de la température au sol.

De préférence, on corrige la valeur d'altitude Am mesurée, à l'aide de l'expression suivante, pour obtenir une valeur d'altitude corrigée Ac :

$$Ac = (Am-Ap).(T1/T2)+Ap,$$

dans laquelle :

- Ap est l'altitude de la piste d'atterrissage ;
- T1 est la température au sol ; et
- T2 est une valeur de température prédéterminée.

Avantageusement, on corrige la valeur d'altitude uniquement si la température au sol est inférieure à une valeur de température prédéterminée.

Dans une seconde variante de réalisation (qui peut être combinée avec ladite première variante de réalisation décrite ci-dessus, pour fournir la valeur d'altitude Am utilisée dans la formule de correction d'altitude correspondant à ladite première variante), on corrige si nécessaire la valeur d'altitude mesurée de manière à obtenir une valeur d'altitude corrigée QNH qui est référencée par rapport au niveau de la mer.

Dans cette seconde variante, premièrement, lorsque la valeur d'altitude mesurée QFE est référencée par rapport à la piste d'atterrissage, on la corrige, à l'aide de l'expression suivante, pour obtenir la valeur d'altitude corrigée QNH :

$$QNH = QFE + Ap,$$

dans laquelle Ap représente l'altitude de la piste d'atterrissage.

En outre, deuxièmement, lorsque la valeur d'altitude mesurée est une altitude standard STD, on la corrige, à l'aide de l'expression suivante, pour obtenir la valeur d'altitude corrigée QNH :

$$QNH = STD + \Delta \text{ avec } \Delta = QNHp - \beta,$$

QNHp étant une valeur dépendant de la pression atmosphérique au niveau de la piste d'atterrissage et β étant une valeur prédéterminée.

La présente invention concerne également un procédé de guidage d'un aéronef lors de son atterrissage sur une piste d'atterrissage, en présence d'un faisceau d'alignement latéral qui est émis à partir du sol et qui donne une indication sur l'alignement latéral par rapport à la piste d'atterrissage.

Selon l'invention, ce procédé est remarquable en ce que l'on réalise, de façon répétitive, jusqu'à l'atterrissage, la suite d'opérations successives suivante :

A/ on met en oeuvre le procédé précité pour déterminer la déviation verticale de l'aéronef ;

B/ on détermine la déviation latérale de l'aéronef par rapport audit faisceau d'alignement latéral détecté ; et

C/ on guide l'aéronef de manière à annuler lesdites déviations verticale et latérale.

Par ailleurs, la présente invention concerne également un dispositif pour déterminer au moins une information de position verticale d'un aéronef lors de son atterrissage sur une piste d'atterrissage, en présence d'un faisceau d'alignement latéral qui est émis à partir du sol et qui donne une indication sur l'alignement latéral par rapport à la piste d'atterrissage. Ce dispositif est remarquable, selon l'invention, en ce qu'il comporte :

- un moyen de détection pour détecter ledit faisceau d'alignement latéral sur l'aéronef ;
- une base de données comportant des informations relatives à l'atterrissage sur ladite piste d'atterrissage ;
- un premier moyen pour déterminer un axe d'approche de l'aéronef, à partir d'informations relatives audit faisceau d'alignement latéral, reçues dudit moyen de détection, et d'informations reçues de ladite base de données ;
- un deuxième moyen pour déterminer la position effective de l'aéronef ;
- un troisième moyen pour déterminer une position de consigne de l'aéronef, qui correspond à la position qu'aurait l'aéronef s'il était sur ledit axe d'approche ; et
- un quatrième moyen pour calculer, à partir de ladite position effective et de ladite position de consigne de l'aéronef, la déviation verticale de l'aéronef, représentant ladite information de position verticale.

De préférence, lesdits premier et deuxième moyens font partie d'une seule et même unité de calcul. De préférence aussi, lesdits troisième et quatrième moyens font partie d'une seule et même unité de calcul.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

Les figures 2 et 3 illustrent des cas différents d'application de la présente invention.

La figure 4 est le schéma synoptique d'une application préférée conforme à l'invention.

Les figures 5 et 6 montrent schématiquement deux situations différentes de mise en oeuvre de la présente invention.

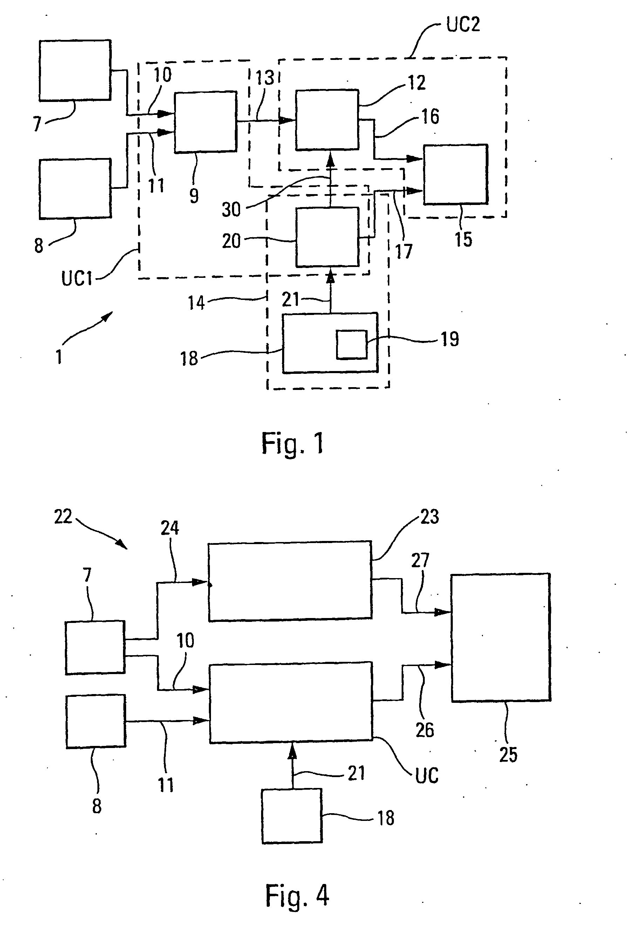

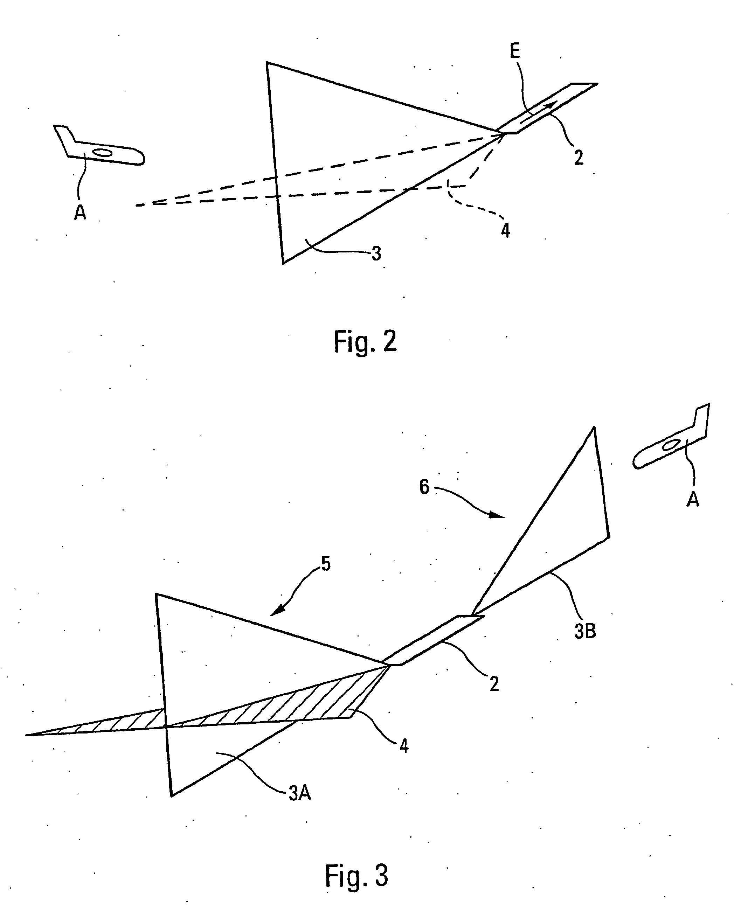

Le dispositif 1 conforme à l'invention et représenté schématiquement sur la figure 1 est destiné à déterminer au moins une information de position verticale d'un aéronef A, en particulier d'un avion de transport civil, lors de son atterrissage sur une piste d'atterrissage 2, en présence d'un faisceau d'alignement latéral 3 qui est émis à partir du sol et qui donne une indication sur l'alignement latéral par rapport à la piste d'atterrissage 2 (figure 2).

Ce faisceau d'alignement latéral 3 est un faisceau "loc" qui est généralement émis par un radioémetteur VHF directionnel, généralement placé sur l'axe de la piste 2 à l'extrémité opposée au seuil d'approche, qui assure le guidage en azimut le long de l'axe d'approche d'après un profil d'alignement latéral idéal en approche "ILS", ce radioémetteur émettant de façon connue deux signaux à modulation différente qui se chevauchent dans l'axe d'approche où les deux signaux sont reçus à égale intensité.

Ce radioémetteur fait partie d'un système de radionavigation usuel qui comporte généralement, de plus, au moins un radioémetteur qui est susceptible d'émettre un faisceau "glide" 4 de guidage vertical, comme représenté en traits interrompus sur la figure 2.

La présente invention s'applique au cas où aucun faisceau "glide" 4 (guidage vertical) n'est disponible, seul un faisceau "loc" 3 (guidage latéral) étant détectable à partir de l'aéronef A.

Un tel cas peut se présenter dans les situations suivantes :

- le système de radionavigation comporte uniquement des moyens pour émettre un faisceau "loc" 3 ou les moyens dudit système de radionavigation destinés à émettre un faisceau "glide" sont en panne, comme représenté sur la figure 2 (l'absence du faisceau "glide" 4 étant mise en évidence par des traits interrompus) ; ou
- le système de radionavigation émet un faisceau "glide" 4 vers l'avant 5 de la piste 2 et des faisceaux "loc" 3A et 3B respectivement vers l'avant 5 et vers l'arrière 6 de la piste 2, et l'atterrissage est réalisé par l'arrière 6, comme représenté sur la figure 3.

Pour pouvoir obtenir une information de position verticale dans un tel cas, ledit dispositif 1 qui est embarqué sur l'aéronef A comporte, selon l'invention, comme représenté sur la figure 1 :

- un moyen de détection 7, à savoir un radiorécepteur usuel, pour détecter ledit faisceau d'alignement latéral 3 (ou 3B) à partir de l'aéronef A ;
- une base de données 8 qui comporte des informations précisées ci-dessous, relatives à l'atterrissage sur ladite piste d'atterrissage 2 ;
- un moyen 9 qui est relié par des liaisons 10 et 11 respectivement au moyen de détection 7 et à la base de données 8 pour déterminer un axe d'approche de l'aéronef A, à partir d'informations relatives audit faisceau d'alignement latéral 3, reçues dudit moyen de détection 7, et d'informations reçues de ladite base de données 8 ;
- un moyen 14 pour déterminer la position effective de l'aéronef A ;
- un moyen 12 qui est relié par une liaison 13 au moyen 9, et par une liaison 30 au moyen 14, pour déterminer une position de consigne de l'aéronef A, qui correspond à la position qu'aurait l'aéronef A s'il était sur ledit axe d'approche ; et
- un moyen 15 qui est relié par des liaisons 16 et 17 respectivement auxdits moyens 12 et 14, pour calculer, à partir de ladite position effective et de ladite position de consigne de l'aéronef A, la déviation verticale de l'aéronef, représentant ladite information de position verticale.

Ainsi, grâce audit dispositif 1 conforme à l'invention, on obtient une information de position verticale de l'aéronef (déviation verticale par rapport à la position prescrite), uniquement à partir d'un faisceau d'alignement latéral 3 (faisceau "loc"), c'est-à-dire sans utiliser un faisceau de guidage vertical 4 (faisceau "glide").

Selon l'invention :

- la base de données 8 contient au moins les informations suivantes : les coordonnées d'un point de référence situé sur le seuil de la piste 2 ou à proximité immédiate de celui-ci, ainsi qu'une pente ou un taux de descente ;
- le moyen 9 détermine à partir de ces informations l'axe d'approche. Pour ce faire, ledit moyen 9 :

  $\alpha$) forme un ensemble de premiers axes passant tous par ledit point de référence et présentant tous ladite pente (ou taux de descente) ; et
  $\beta$) choisit comme axe d'approche un premier axe dudit ensemble de premiers axes, dont la projection sur un plan horizontal est parallèle à la projection sur ce plan horizontal dudit faisceau d'alignement latéral 3 détecté par le moyen de détection 7 ; et

-   le moyen 14 détermine la position effective de l'aéronef, à partir de valeurs de longitude, de latitude et d'altitude de l'aéronef.

Pour ce faire, ledit moyen 14 comporte, de préférence :

-   un ensemble 18 de capteurs, par exemple une centrale inertielle et/ou un dispositif de réception GPS ("Global Positioning System") pour déterminer les valeurs de latitude et de longitude de l'aéronef A et au moins une sonde barométrique 19 pour réaliser une mesure d'altitude ; et
-   un moyen de calcul 20 qui est relié par une liaison 21 audit ensemble 18 de capteurs, pour calculer la position effective de l'aéronef A à partir des valeurs mesurées par ledit ensemble 18 de capteurs.

Dans un mode de réalisation préféré :

-   les moyens 9 et 20 font partie d'une seule et même unité de calcul UC1, par exemple un calculateur de gestion de vol, de préférence de type "FMS" ("Flight Management System") ; et
-   les moyens 12 et 15 font partie d'une seule et même unité de calcul UC2, par exemple un récepteur multimode d'aide à l'atterrissage, de préférence de type "MMR" ("Multi Mode Receiver").

Dans un mode de réalisation préféré, pour déterminer la position de consigne de l'aéronef A sur l'axe d'approche, on procède de la façon suivante. Dans un plan horizontal, on considère un premier point correspondant à la position effective de l'aéronef (mêmes latitude et longitude) déterminée par le moyen 14. On considère une droite correspondant à la projection verticale, dans ce plan horizontal, de l'axe d'approche déterminé par le moyen 9. On détermine un second point dans ce plan horizontal correspondant à la projection orthogonale dudit premier point sur cette droite et on considère un plan vertical orthogonal à cette droite et contenant ledit second point. La position de consigne de l'aéronef sur l'axe d'approche correspond à l'intersection de cet axe d'approche avec ce plan vertical.

Bien entendu, une application préférée, mais non exclusive, du dispositif 1 conforme à l'invention, concerne le guidage d'un aéronef A lors de son atterrissage.

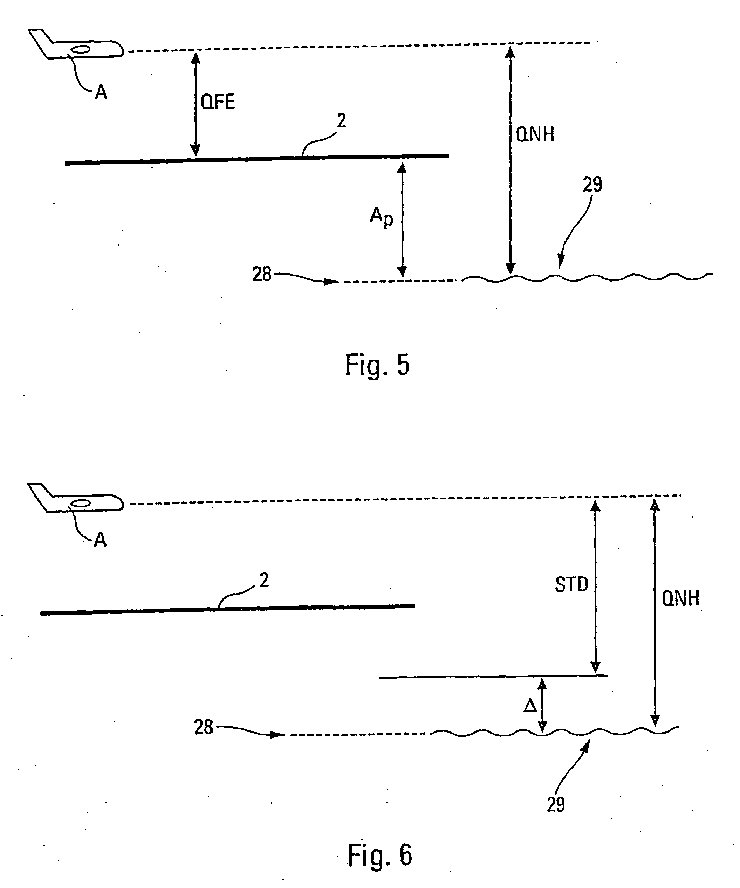

Dans ce cas, ledit dispositif 1 fait partie d'un dispositif de guidage 22 qui comporte de plus, comme représenté sur la figure 4 :

-   un moyen usuel 23 qui est relié par une liaison 24 au moyen de détection 7 et qui détermine, de façon usuelle, la déviation latérale de l'aéronef A par rapport audit faisceau d'alignement latéral 3 détecté par ledit moyen de détection 7 ; et
-   un dispositif utilisateur 25 qui reçoit lesdites déviations verticale et latérale respectivement dudit dispositif 1 et dudit moyen 23 par l'intermédiaire de liaisons 26 et 27. Pour des raisons de simplification du dessin, on a représenté sur la figure 4 les unités de calcul UC1 et UC2 sous forme d'une unité centrale UC regroupant ces deux unités de calcul UC1 et UC2. Ledit dispositif utilisateur 25 permet de réaliser le guidage de l'aéronef A lors de l'atterrissage.

Dans le cadre de la présente invention, ce guidage qui consiste à annuler lesdites déviations verticale et latérale, peut par exemple être similaire à celui effectué dans le cas où l'aéronef fait une approche de précision "ILS" usuelle. Selon un premier mode de réalisation, ce guidage peut être réalisé au moyen d'un pilote automatique de l'aéronef A. Selon un second mode de réalisation, ce guidage peut être réalisé par le pilote qui dispose d'un indicateur dit "directeur de vol" sur un écran de l'aéronef [par exemple un écran primaire de pilotage "PFD" ("Primary Flight Display" en anglais)]. Selon un autre mode de réalisation, le pilote ne dispose que desdites déviations latérale et verticale à l'aide d'un moyen d'information approprié (par exemple un écran) et il corrige la trajectoire de l'aéronef A (en le pilotant) de façon à annuler ces déviations.

Par conséquent, le dispositif utilisateur 25 peut donc être, notamment, un pilote automatique, un écran ou un autre moyen d'information usuel.

Le dispositif de guidage 22 conforme à l'invention permet donc d'effectuer un guidage de l'aéronef A en phase d'approche d'un aéroport et lors de l'atterrissage, de façon similaire à un guidage réalisé lors d'une approche de précision "ILS", dans le cas particulier et difficile considéré dans la présente invention (absence de faisceau "glide"). Ceci permet de réduire la charge de travail du pilote, améliore l'ergonomie puisque l'interface utilisatrice est similaire à celle utilisée pour une approche "ILS", et apporte une sécurité de vol accrue.

Le dispositif de guidage 22 conforme à l'invention apporte donc une aide essentielle à l'atterrissage, en particulier par mauvaise visibilité (brouillard, ...) ou en absence de visibilité.

On précise ci-après différentes caractéristiques du dispositif 1 conforme à l'invention.

Dans un mode de réalisation préféré de l'invention, le moyen de calcul 20 corrige la valeur d'altitude mesurée par la sonde barométrique 19, en fonction de la température au sol.

Pour ce faire, ledit moyen de calcul 20 corrige la valeur d'altitude Am mesurée, à l'aide de l'expression suivante, pour obtenir une valeur d'altitude corrigée Ac :

$$Ac = (Am-Ap).(T1/T2) + Ap$$

dans laquelle :

- Ap est l'altitude de la piste d'atterrissage 2 de l'aéroport (publiée sur des cartes d'approche et stockée dans une base de données) ;
- T1 est la température au sol ; et
- T2 est une valeur de température prédéterminée.

Dans une première variante de ce mode de réalisation préféré, la valeur de la température T1 mesurée sur l'aéroport est communiquée verbalement au pilote (par liaison radio avec la tour de contrôle de l'aéroport) et le pilote entre cette valeur dans un calculateur (unité de calcul UC1 par exemple) de l'aéronef A au moyen d'un dispositif de saisie approprié (non représenté), par exemple une interface de type "MCDU" ("Multipurpose Control Display Unit" en anglais, c'est-à-dire unité d'affichage et de commande à usages multiples en français). Dans une seconde variante, cette valeur de la température T1 mesurée sur l'aéroport est transmise à un calculateur (unité de calcul UC1 par exemple) de l'aéronef A au moyen d'une liaison de données numérique (non représentée), par exemple une liaison radio, entre le contrôle aérien et l'aéronef A. De façon préférée, la correction d'altitude selon l'expression précitée n'est réalisée que si la température au sol T1 est inférieure à une valeur de température prédéterminée, en particulier à la valeur T2.

Ce mode de réalisation préféré présente l'avantage de corriger automatiquement l'altitude de l'aéronef A en fonction de la température lors du guidage de cet aéronef le long d'un axe d'approche, alors qu'actuellement les pilotes doivent corriger cette altitude en utilisant des abaques, notamment lorsqu'ils atterrissent sur des aéroports où la température est particulièrement basse.

Dans un autre mode de réalisation (qui peut être combiné avec le mode de réalisation préféré décrit ci-dessus pour fournir la valeur d'altitude Am utilisée dans la formule de correction d'altitude correspondant audit mode de réalisation préféré), l'altitude de l'aéronef utilisée pour le calcul de ladite déviation verticale est corrigée (si cela est nécessaire) de façon à être référencée par rapport au niveau 28 de la mer 29 (altitude dite QNH).

Une telle correction est réalisée notamment dans deux cas :

- l'altitude mesurée est référencée par rapport à la piste 2 de l'aéroport (altitude dite QFE). L'altitude Ap de la piste 2 par rapport au niveau 28 de la mer 29 étant connue (figure 5) et disponible, de façon connue, dans une base de données embarquée à bord de l'aéronef, on calcule l'altitude QNH à l'aide de l'expression suivante :

$$QNH = QFE + Ap$$

- l'altitude mesurée est une altitude dite standard (STD), c'est-à-dire une altitude qui correspond à un écart entre la pression mesurée par des capteurs de l'aéronef A et une pression de référence égale à 1013 HPa.

De façon connue, on calcule alors l'altitude corrigée QNH à l'aide de l'expression suivante (figure 6) :

$$QNH = STD + \Delta \text{ avec } \Delta = QNHp - \beta,$$

QNHp dépendant de la pression atmosphérique au niveau de la piste d'atterrissage 2 et $\beta$ étant une valeur prédéterminée.

Dans une première variante de ce dernier mode de réalisation, la valeur QNHp est communiquée verbalement au pilote (par exemple par liaison radio avec la tour de contrôle de l'aéroport) et le pilote entre cette valeur dans un calculateur (unité de calcul UC1 par exemple) de l'aéronef A au moyen d'un dispositif de saisie approprié, par exemple une interface de type "MCDU". Dans une seconde variante, cette valeur est transmise à un calculateur (unité de calcul UC1 par exemple) de l'aéronef A au moyen d'une liaison de données numérique (non représentée), par exemple une liaison radio, entre le contrôle aérien et l'aéronef A.

Ce mode de réalisation présente l'avantage d'utiliser une référence unique d'altitude quelle que soit la référence choisie par le pilote. Cela facilite le guidage de l'aéronef A. En effet, le guidage s'effectue généralement par rapport à des points de passage, dont l'altitude (QNH) indiquée sur les cartes d'approche est référencée par rapport au niveau 28 de la mer 29. De plus, généralement, l'altitude du point de référence utilisé pour la détermination de l'axe d'approche est, elle aussi, référencée par rapport au niveau 28 de la mer 29.

**Revendications**

1. Procédé pour déterminer au moins une information de position verticale d'un aéronef (A) lors de son atterrissage sur une piste d'atterrissage (2), en présence d'un faisceau d'alignement latéral (3, 3B) qui est émis à partir du sol et qui donne une indication sur l'alignement latéral par rapport à la piste d'atterrissage (2),
**caractérisé en ce que** :

   a) on détecte ledit faisceau d'alignement latéral (3, 3B) sur l'aéronef (A) ;
   b) à partir d'informations relatives audit faisceau d'alignement latéral (3, 3B) ainsi détecté et d'informations prédéterminées, on détermine un axe d'approche de l'aéronef (A) ;
   c) on détermine la position effective de l'aéronef (A) ;

d) on détermine une position de consigne de l'aéronef (A), qui correspond à la position qu'aurait l'aéronef (A) s'il se trouvait sur ledit axe d'approche ; et

e) à partir de ladite position effective et de ladite position de consigne de l'aéronef (A), on calcule la déviation verticale de l'aéronef (A), qui représente ladite information de position verticale.

2. Procédé selon la revendication 1, **caractérisé en ce qu'**à l'étape b), pour déterminer ledit axe d'approche :

α) on forme un ensemble de premiers axes passant tous par un même point prédéterminé situé au sol au moins à proximité de ladite piste d'atterrissage (2) et présentant tous une même pente prédéterminée ; et

β) on choisit comme axe d'approche un premier axe dudit ensemble de premiers axes, dont la projection sur un plan horizontal est parallèle à la projection sur ce plan horizontal dudit faisceau d'alignement latéral (3, 3B) détecté.

3. Procédé selon l'une des revendications 1 et 2, **caractérisé en ce qu'**à l'étape c), on détermine la position effective de l'aéronef (A), à partir de valeurs de longitude, de latitude et d'altitude de l'aéronef (A).

4. Procédé selon la revendication 3, **caractérisé en ce que** la valeur d'altitude de l'aéronef (A) est obtenue à l'aide d'au moins une mesure réalisée par au moins une sonde barométrique (19).

5. Procédé selon l'une des revendications 3 et 4, **caractérisé en ce que** l'on corrige la valeur d'altitude qui est mesurée, en fonction de la température au sol.

6. Procédé selon la revendication 5, **caractérisé en ce que** l'on corrige la valeur d'altitude Am mesurée, à l'aide de l'expression suivante, pour obtenir une valeur d'altitude corrigée Ac :

$$Ac = (Am-Ap).(T1/T2)+Ap$$

dans laquelle :

- Ap représente l'altitude de la piste d'atterrissage (2) ;
- T1 est la température au sol ; et
- T2 est une valeur de température prédéterminée.

7. Procédé selon l'une des revendications 5 ou 6, **caractérisé en ce que** l'on corrige la valeur d'altitude uniquement si la température au sol est inférieure à une valeur de température prédéterminée.

8. Procédé selon l'une quelconque des revendications 3 à 7, **caractérisé en ce que** l'on corrige la valeur d'altitude mesurée de manière à obtenir une valeur d'altitude corrigée QNH qui est référencée par rapport au niveau (28) de la mer (29).

9. Procédé selon la revendication 8, **caractérisé en ce que**, lorsque la valeur d'altitude mesurée QFE est référencée par rapport à la piste d'atterrissage (2), on la corrige, à l'aide de l'expression suivante, pour obtenir la valeur d'altitude corrigée QNH :

$$QNH = QFE + Ap,$$

dans laquelle Ap représente l'altitude de la piste d'atterrissage (2).

10. Procédé selon la revendication 8, **caractérisé en ce que**, lorsque la valeur d'altitude mesurée est une altitude standard STD, on la corrige, à l'aide de l'expression suivante, pour obtenir la valeur d'altitude corrigée QNH :

$$QNH = STD + \Delta \text{ avec } \Delta = QNHp - \beta,$$

QNHp étant une valeur dépendant de la pression atmosphérique au niveau de la piste d'atterrissage (2) et β étant une valeur prédéterminée.

11. Procédé de guidage d'un aéronef (A) lors de son atterrissage sur une piste d'atterrissage (2), en présence d'un faisceau d'alignement latéral (3, 3B) qui est émis à partir du sol et qui donne une indication sur l'alignement latéral par rapport à la piste d'atterrissage (2), **caractérisé en ce que** l'on réalise, de façon répétitive, jusqu'à l'atterrissage, la suite d'opérations successives suivante :

A/ on met en oeuvre le procédé spécifié sous l'une quelconque des revendications 1 à 10, pour déterminer la déviation verticale de l'aéronef (A) ;

B/ on détermine la déviation latérale de l'aéronef (A) par rapport audit faisceau d'alignement latéral (3, 3B) détecté ; et

C/ on guide l'aéronef (A) de manière à annuler lesdites déviations verticale et latérale.

**12.** Dispositif pour déterminer au moins une information de position verticale d'un aéronef (A) lors de son atterrissage sur une piste d'atterrissage (2), en présence d'un faisceau d'alignement latéral (3, 3B) qui est émis à partir du sol et qui donne une indication sur l'alignement latéral par rapport à la piste d'atterrissage (2),
**caractérisé en ce qu'**il comporte :

- un moyen de détection (7) pour détecter ledit faisceau d'alignement latéral (3, 3B) sur l'aéronef (A) ;
- une base de données (8) comportant des informations relatives à l'atterrissage sur ladite piste d'atterrissage (2) ;
- un premier moyen (9) pour déterminer un axe d'approche de l'aéronef (A), à partir d'informations relatives audit faisceau d'alignement latéral (3, 3B), reçues dudit moyen de détection (7), et d'informations reçues de ladite base de données (8) ;
- un deuxième moyen (14) pour déterminer la position effective de l'aéronef (A) ;
- un troisième moyen (12) pour déterminer une position de consigne de l'aéronef (A), qui correspond à la position qu'aurait l'aéronef (A) s'il se trouvait sur ledit axe d'approche ; et
- un quatrième moyen (15) pour calculer, à partir de ladite position effective et de ladite position de consigne de l'aéronef (A), la déviation verticale de l'aéronef (A), représentant ladite information de position verticale.

**13.** Dispositif selon la revendication 12,
**caractérisé en ce que** lesdits premier et deuxième moyens (9, 20) font partie d'une seule et même unité de calcul (UC1).

**14.** Dispositif selon l'une des revendications 12 et 13,
**caractérisé en ce que** lesdits troisième et quatrième moyens (12, 15) font partie d'une seule et même unité de calcul (UC2).

**15.** Aéronef,
**caractérisé en ce qu'**il comporte un dispositif selon l'une des revendications 12 à 14, susceptible de mettre en oeuvre le procédé spécifié sous l'une quelconque des revendications 1 à 11.

**Patentansprüche**

**1.** Verfahren zur Bestimmung von mindestens einer Angabe bezüglich der vertikalen Position eines Luftfahrzeuges (A) während seiner Landung auf einer Landebahn (2), wenn ein Leitstrahl zur horizontalen Ausrichtung (3, 3B) vorhanden ist, der vom Boden aus ausgestrahlt wird, und der eine Angabe über die horizontale Ausrichtung bezogen auf die Landebahn (2) liefert,
wobei:

    a) der Leitstrahl zur horizontalen Ausrichtung (3, 3B) vom Luftfahrzeug (A) aus ermittelt wird;
    b) anhand der Informationen bezüglich des ermittelten Leitstrahls zur horizontalen Ausrichtung (3, 3B) und anhand im Voraus bestimmter Informationen eine Anflugachse des Luftfahrzeuges (A) bestimmt wird;
    c) die Momentanposition des Luftfahrzeuges (A) bestimmt wird;
    d) eine Sollposition des Luftfahrzeuges (A) bestimmt wird, die der Position entspricht, die das Luftfahrzeug (A) hätte, wenn es sich auf der Anflugachse befinden würde;
    e) anhand der Momentanposition und der Sollposition des Luftfahrzeuges (A) die vertikale Abweichung des Luftfahrzeuges (A) berechnet wird, die die Information über die vertikale Position darstellt.

**2.** Verfahren nach Anspruch 1,
wobei zur Bestimmung der Anflugachse gemäß Schritt b) wie folgt vorgegangen wird:

    ä) es wird eine Gesamtheit aus ersten Achsen gebildet, die alle durch einen im Voraus festgelegten Punkt am Boden gehen, der sich zumindest in der Nähe der Landebahn (2) befindet, und die alle dieselbe im Voraus bestimmte Neigung aufweisen; und
    ä) als Anflugachse wird eine erste Achse aus der Gesamtheit der ersten Achsen gewählt, deren Projektion auf eine horizontale Ebene parallel zu der Projektion auf diese horizontale Ebene des ermittelten Leitstrahls zur horizontalen Ausrichtung (3, 3B) ist.

**3.** Verfahren nach einem der Ansprüche 1 und 2,
wobei in Schritt c) anhand von Längengrad, Breitengrad und Höhe des Luftfahrzeuges (A) dessen Momentanposition bestimmt wird.

**4.** Verfahren nach Anspruch 3,
wobei die Höhe des Luftfahrzeuges (A) mit Hilfe von mindestens einer Messung erhalten wird, die mit mindestens einer barometrischen Sonde (19) ausgeführt wird.

**5.** Verfahren nach einem der Ansprüche 3 und 4,
wobei die gemessene Höhe entsprechend der Bodentemperatur korrigiert wird.

**6.** Verfahren nach Anspruch 5,
wobei die gemessene Höhe Am mit Hilfe des folgenden Ausdrucks korrigiert wird, um eine korrigierte Höhe Ac zu erhalten:

$$Ac = (Am-Ap).(T1/T2) + Ap,$$

wobei:

- Ap die Höhe der Landebahn (2) darstellt;
- T1 die Bodentemperatur ist; und
- T2 eine im Voraus bestimmte Temperatur ist.

7. Verfahren nach einem der Ansprüche 5 oder 6, wobei die Höhe nur dann korrigiert wird, wenn die Bodentemperatur niedriger ist als eine im Voraus bestimmte Temperatur.

8. Verfahren nach einem der Ansprüche 3 bis 7, wobei die gemessene Höhe derart korrigiert wird, dass man eine korrigierte QNH-Höhe erhält, die die Höhe bezogen auf das Niveau (28) des Meeres (29) angibt.

9. Verfahren nach Anspruch 8, wobei die gemessene QFE-Höhe, wenn diese auf die Landebahn (2) bezogen ist, mit Hilfe des folgenden Ausdrucks korrigiert wird, um die korrigierte QNH-Höhe zu erhalten:

$$QNH = QFE + Ap,$$

wobei Ap die Höhe der Landebahn (2) ist.

10. Verfahren nach Anspruch 8, wobei die gemessene Höhe, wenn sie eine Standardhöhe STD ist, mit Hilfe des folgenden Ausdrucks korrigiert wird, um die korrigierte QNH-Höhe zu erhalten:

$$QNH = STD + \Delta, \text{ mit } \Delta = QNHp - \beta,$$

wobei QNHp ein Wert ist, der vom atmosphärischen Druck in Höhe der Landebahn (2) abhängt, und $\beta$ ein im Voraus bestimmter Wert ist.

11. Verfahren zur Führung eines Luftfahrzeuges (A) bei seiner Landung auf einer Landebahn (2), wenn ein Leitstrahl zur horizontalen Ausrichtung (3, 3B) vorhanden ist, der vom Boden aus ausgestrahlt wird, und der eine Angabe über die horizontale Ausrichtung bezogen auf die Landebahn (2) liefert, wobei repetierend bis zur Landung die folgenden aufeinanderfolgenden Schritte ausgeführt werden:

A/ das unter einem der Ansprüche 1 bis 10 spezifizierte Verfahren zur Bestimmung der vertikalen Abweichung des Luftfahrzeuges (A) wird ausgeführt;

B/ die horizontale Abweichung des Luftfahrzeuges (A) bezogen auf den ermittelten Leitstrahl zur horizontalen Ausrichtung (3, 3B) wird bestimmt; und

C/ das Luftfahrzeug (A) wird derart geführt, dass keine vertikalen oder horizontalen Abweichungen mehr bestehen.

12. Vorrichtung zur Bestimmung von mindestens einer Angabe zur vertikalen Position eines Luftfahrzeuges (A) bei seiner Landung auf einer Landebahn (2), wenn ein Leitstrahl zur horizontalen Ausrichtung (3, 3B) vorhanden ist, der vom Boden aus ausgestrahlt wird, und der eine Angabe über die horizontale Ausrichtung bezogen auf die Landebahn (2) liefert, wobei sie Folgendes aufweist:

- ein Detektionsmittel (7), um den Leitstrahl zur horizontalen Ausrichtung (3, 3B) vom Luftfahrzeug (A) aus zu ermitteln;
- eine Datenbank (8) mit Informationen bezüglich der Landung auf der Landebahn (2);
- ein erstes Mittel (9) zur Bestimmung einer Anflugachse des Luftfahrzeuges (A) anhand von Informationen über den Leitstrahl zur horizontalen Ausrichtung (3, 3B), die vom Detektionsmittel (7) empfangen wurden, und anhand von Informationen, die von der Datenbank (8) empfangen wurden;
- ein zweites Mittel (14) zur Bestimmung der Momentanposition des Luftfahrzeuges (A);
- ein drittes Mittel (12) zur Bestimmung einer Sollposition des Luftfahrzeuges (A), die der Position entspricht, die das Luftfahrzeug (A) hätte, wenn es sich auf der Anflugachse befinden würde; und
- ein viertes Mittel (15), um anhand der Momentanposition und der Sollposition des Luftfahrzeuges (A) die vertikale Abweichung des Luftfahrzeuges (A) zu berechnen, die die Information über die vertikale Position darstellt.

13. Vorrichtung nach Anspruch 12, wobei das erste und das zweite Mittel (9, 20) Teil ein und derselben Rechnereinheit (UC1) sind.

14. Vorrichtung nach einem der Ansprüche 12 und 13, wobei das dritte und das vierte Mittel (12, 15) Teil ein und derselben Rechnereinheit (UC2) sind.

15. Luftfahrzeug, wobei es eine Vorrichtung gemäß einem der Ansprüche 12 bis 14 aufweist, die in der Lage ist, das Verfahren auszuführen, das unter einem der Ansprüche 1 bis 11 spezifiziert wird.

**Claims**

1.  A method of determining at least one cue of vertical position of an aircraft (A) during landing thereof on a landing strip (2), in the presence of a lateral alignment beam (3, 3B) which is emitted from the ground and which gives an indication regarding the lateral alignment with respect to the landing strip (2), **characterized in that**:

    a) said lateral alignment beam (3, 3B) is detected on the aircraft (A);
    b) on the basis of cues relating to said lateral alignment beam (3, 3B) thus detected and of predetermined cues, an axis of approach of the aircraft (A) is determined;
    c) the actual position of the aircraft (A) is determined;
    d) a preset position of the aircraft (A) is determined, which corresponds to the position that the aircraft (A) would have if it were on said approach axis; and
    e) on the basis of said actual position and of said preset position of the aircraft (A), the vertical deviation of the aircraft (A), which represents said vertical position cue, is computed.

2.  The method as claimed in claim 1, **characterized in that**, in step b), to determine said approach axis:

    $\alpha$) a set of first axes all passing through one and the same predetermined point situated on the ground at least in proximity to said landing strip (2) and all exhibiting one and the same predetermined slope is formed; and
    $\beta$) a first axis of said set of first axes, whose projection onto a horizontal plane is parallel to the projection onto this horizontal plane of said lateral alignment beam (3, 3B) detected, is chosen as approach axis.

3.  The method as claimed in either of claims 1 and 2, **characterized in that**, in step c), the actual position of the aircraft (A) is determined on the basis of values of longitude, of latitude and of altitude of the aircraft (A).

4.  The method as claimed in claim 3, **characterized in that** the value of altitude of the aircraft (A) is obtained with the aid of at least one measurement carried out by at least one barometric probe (19).

5.  The method as claimed in either of claims 3 and 4, **characterized in that** the altitude value which is measured is corrected, as a function of the temperature on the ground.

6.  The method as claimed in claim 5, **characterized in that** the altitude value Am measured is corrected with the aid of the following expression, to obtain a corrected altitude value Ac:

    $$Ac = (Am-Ap).(T1/T2) + Ap$$

    in which:

    - Ap represents the altitude of the landing strip (2);
    - T1 is the temperature on the ground; and
    - T2 is a predetermined temperature value.

7.  The method as claimed in either of claims 5 and 6, **characterized in that** the altitude value is corrected only if the temperature on the ground is less than a predetermined temperature value.

8.  The method as claimed in any one of claims 3 to 7, **characterized in that** the altitude value measured is corrected in such a way as to obtain a corrected altitude value QNH which is referenced with respect to the level (28) of the sea (29).

9.  The method as claimed in claim 8, **characterized in that**, when the measured altitude value QFE is referenced with respect to the landing strip (2), it is corrected, with the aid of the following expression, to obtain the corrected altitude value QNH:

    $$QNH = QFE + Ap,$$

    in which Ap represents the altitude of the landing strip (2).

10. The method as claimed in claim 8, **characterized in that**, when the measured altitude value is a standard altitude STD, it is corrected, with the aid of the following expression, to obtain the corrected altitude value QNH:

    $$QNH = STD + \Delta \text{ with } \Delta = QNHp - \beta,$$

    QNHp being a value dependent on the atmospheric pressure at the level of the landing strip (2) and $\beta$ being a predetermined value.

11. A method of guiding an aircraft (A) during landing thereof on a landing strip (2), in the presence of a lateral alignment beam (3, 3B) which is emitted from the ground and which gives an indication regarding the lateral alignment with respect to the landing strip (2),

**characterized in that** the following series of successive operations is carried out repetitively up to landing:

A/ the method specified under any one of claims 1 to 10 is implemented to determine the vertical deviation of the aircraft (A);
B/ the lateral deviation of the aircraft (A) with respect to said lateral alignment beam (3, 3B) detected is determined; and
C/ the aircraft (A) is guided in such a way as to cancel out said vertical and lateral deviations.

**12.** A device for determining at least one cue of vertical position of an aircraft (A) during landing thereof on a landing strip (2), in the presence of a lateral alignment beam (3, 3B) which is emitted from the ground and which gives an indication regarding the lateral alignment with respect to the landing strip (2), **characterized in that** it comprises:

- a means of detection (7) for detecting said lateral alignment beam (3, 3B) on the aircraft (A);
- a database (8) comprising cues relating to landing on said landing strip (2);
- a first means (9) for determining an axis of approach of the aircraft (A), on the basis of cues relating to said lateral alignment beam (3, 3B) that are received from said means of detection (7), and cues received from said database (8);
- a second means (14) for determining the actual position of the aircraft (A);
- a third means (12) for determining a preset position of the aircraft (A), which corresponds to the position that the aircraft (A) would have if it were on said approach axis; and
- a fourth means (15) for computing, on the basis of said actual position and of said preset position of the aircraft (A), the vertical deviation of the aircraft (A), representing said vertical position cue.

**13.** The device as claimed in claim 12, **characterized in that** said first and second means (9, 20) form part of one and the same computation unit (UC1).

**14.** The device as claimed in either of claims 12 and 13, **characterized in that** said third and fourth means (12, 15) form part of one and the same computation unit (UC2).

**15.** An aircraft, **characterized in that** it comprises a device as claimed in one of claims 12 to 14, which is able to implement the method specified under any one of claims 1 to 11.

Fig. 1

Fig. 4

Fig. 2

Fig. 3

Fig. 5

Fig. 6